# EUROPÄISCHE PATENTSCHRIFT

(11) **EP 0 807 382 B1**
(45) Veröffentlichungstag und Bekanntmachung des Hinweises auf die Patenterteilung: **08.06.2005**
(21) Anmeldenummer: 97113477.0
(22) Anmeldetag: 10.07.1992
(51) Int. Cl.: A01N 47/36

(54) **Synergistische herbizide Mittel**
Synergistic herbicidal agents
Agents herbicides synergiques

(30) Priorität: 12.07.1991 DE 4123111
(43) Veröffentlichungstag der Anmeldung: 19.11.1997
(62) Teilanmeldung aus: 95120472.6
(73) Patentinhaber: Bayer CropScience GmbH, 65929 Frankfurt/Main (DE)
(72) Erfinder: Hacker, Erwin, Dr., 65239 Hochheim am Main (DE); Huff, Hans-Philipp, Dr., 65817 Eppstein/Ts. (DE); Hess, Martin, Dr., 55128 Mainz (DE); Schumacher, Hans, Dr., 65439 Flörsheim/Main (DE)
(74) Vertreter: Luderschmidt, Schüler & Partner GbR

(56) Entgegenhaltungen:
- EP-A- 0 120 578
- EP-A- 0 236 273
- EP-A- 0 248 968
- EP-A- 0 298 901
- EP-A- 0 324 302
- EP-A- 0 401 677
- EP-A- 0 401 678
- AU-B- 587 549
- US-A- 4 460 402
- CENTRAL PATENTS INDEX, BASIC ABSTRACTS JOURNAL Week 8618 25. Juni 1986 Derwent Publications Ltd., London, GB; AN 86-116638 XP002075595 & JP 61 057 505 A (NISSAN CHEM IND KK) , 24. März 1986
- CENTRAL PATENTS INDEX, BASIC ABSTRACTS JOURNAL Week 8351 22. Februar 1984 Derwent Publications Ltd., London, GB; AN 83-847153 XP002026980 & JP 58 192 808 A (NIHON TOKUSHU NOYAKU SEI) , 10. November 1983
- CORNES, D. W. ET AL: "The efficacy and crop safety of a herbicide + safener combination in cereals under UK conditions" BRIGHTON CROP PROTECTION CONFERENCE -WEEDS , Nr. 2, 1989, Seiten 729-34, XP002075569 Thornton Heath, GB
- AMREIN, J. ET AL: "CGA 184'927 + S: a new post-emergence grasskiller for use in cereals" BRIGHTON CROP PROTETECTION CONFERENCE -WEEDS , Nr. 1, 1989, Seiten 71-6, XP002075570 Thornton Heath, GB
- P.A. O'SULLIVAN ET AL.: "Chlorsulfuron Reduced Control of Wild Oat (Avena fatua) with Diclofop, Difenzoquat, and Flamprop" WEED SCIENCE, Bd. 32, Nr. 3, 1984, Seiten 285-9, XP002026976 GAINESVILLE, FLA, US
- R.B. WARNER ET AL.: "'Tralkoxydim - A New Post-Emergence Cereal Selective Graminicide" PROCEEDINGS-BRITSIH CROP PROTECTION CONFERENCE- WEEDS, Nr. 1, 1987, Seiten 19-26, XP002026978 LONDON,GB
- R.K. ZOLLINGER ET AL.: "Antagonism between Selected Postemergence Herbicides for Grass and Broadleaved Weeds" PROCEEDINGS OF THE WESTERN SOCIETY OF WEED SCIENCE, Bd. 37, 1984, Seiten 167-71, XP002026977 BOISE, US
- M.D. DEVINE ET AL.: "Inhibition of Acetolactate Synthase in Susceptible and Resistant Biotypes of Stellaria media" PESTICIDE SCIENCE, Bd. 31, Nr. 3, März 1991, Seiten 273-80, XP000568545 BARKING GB

## Beschreibung

Die Erfindung liegt auf dem Gebiet der Pflanzenschutzmittel, die gegen monokotyle und dikotyle Unkräuter eingesetzt werden können, insbesondere der Kombinationen von Herbiziden.

Zur Bekämpfung des in der landwirtschaftlichen Praxis auftretenden Spektrums an mono- und dikotylen Unkräutern reicht die Wirkung eines einzelnen Herbizids bei vertretbarer Aufwandmenge oft nicht aus. Um den Praktiker in die Lage zu versetzen, mit einer oder wenigen Applikation(en) von herbiziden Wirkstoffen das Unkrautspektrum in Getreide, Mais u.a. Kulturarten zu bekämpfen, sind Kombinationen aus verschiedenen Wirkstoffen manchmal besser geeignet.

EP 2 98 901 A offenbart Herbizidkombinationen aus Diphenylethern, wie z. B. Chlorsulfuron oder Metsulfuron.

EP 4 01 677 A beschreibt herbizide Mittel aus Amidosulfuron und Ioxynil oder Bromoxynil.

EP 4 01 678 A beschreibt herbizide Mittel aus Amidosulfuron und Phenylharnstoffen wie Isoproturon oder Chlortoluron.

Aus JP 61057 505 A kennt man herbizid wirksame Mischungen aus Pyrazolsulfonylharnstoffen und 2,4- Dichlor-3-methoxy-4-nitro diphenylether.

Aus US 4 460 402 A sind synergistische Mischungen aus Phenoxybenzoesäureestern und Cyclohexandionen bekannt.

EP 1 20 578 A offenbart herbizide Mischungen aus einem Diphenylether mit Dicamba, Mecoprop oder Ioxynil. Es wurden nun Kombinationen von Herbiziden gefunden, deren Wirkung überraschenderweise über das Maß hinausgeht, das anhand der Einzelwirkung der Kombinationspartner zu erwarten war. Die erfindungsgemäßen Kombinationen von Herbiziden ermöglichen somit eine überraschend starke Reduzierung der Aufwandmenge jeder der Kombinationspartner.

Gegenstand der Erfindung sind somit herbizide Mittel, welche
A) eine Verbindung der Formel I oder deren Salze 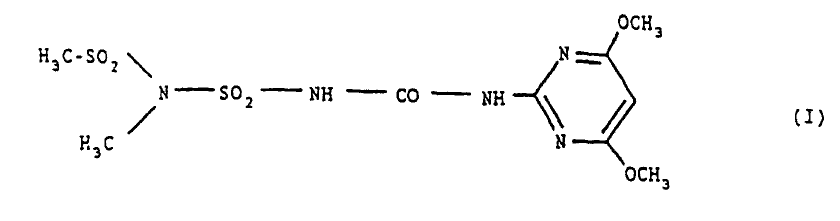 in Kombination mit
B) einer oder mehreren Verbindungen aus der Gruppe, welche aus Nitrodiphenylethern, besteht, in einer synergistisch wirksamen Menge enthalten.

Die Verbindung der Formel (I) wird als Amidosulfuron bezeichnet und ist aus EP-A-0 131 258 (US-A-4,718,937) bekannt.

Amidosulfuron ist ein herbizider Wirkstoff aus der Gruppe der Sulfonylharnstoffe und wird in der Regel mit Aufwandmengen von 5 - 120 g ai/ha im Vor- und Nachauflauf-Verfahren in Getreide, Reis sowie Mais appliziert, wobei ein breites Spektrum an annuellen und perennierenden Unkräutern und Cyperaceen bekämpft werden (g ai/ha = Gramm pro Hektar, bezogen auf aktiven Wirkstoff). Zur Anwendung wird der Wirkstoff in der Regel als WP (wasserlösliches Spritzpulver) oder WDG (wasserdispergierbares Granulat) formuliert und in üblicher Weise mit Wasser verdünnt eingesetzt.

Als Nitrodiphenylether sind vor allem folgende geeignet:
a) Bifenox, d.h. 5-(2,4-Dichlorphenoxy)-2-nitrobenzoesäuremethylester; Aufwandmenge 50 - 1000 g ai/ha als Einzelwirkstoff bei Vor- und Nachauflaufapplikation z.B. in Getreide, Reis und Mais.
b) Fluorglycofen, d.h. 5-[2-Chlor-4-(trifluormethyl)-phenoxy]-2-nitrobenzoesäurecarboxymethylester; Anwendung als Einzelwirkstoff z.B. nur 5 - 50 g ai/ha im Vor- und Nachauflauf in Getreide und Soja.
c) Acifluorfen, d.h. 5-[2-Chlor-4-(trifluormethyl)-phenoxy]-2-nitrobenzoesäure oder deren Salze; Anwendung als Einzelwirkstoff z.B. mit 100 - 500 g ai/ha im Vor- und Nachauflauf in Soja und Getreide.
d) Oxyfluorfen, d.h. 5-[2-Chlor-4-(trifluormethyl)-phenoxy]-1-ethoxy-2-nitrobenzol; Anwendung als Einzelwirkstoff z.B. mit 100 - 1000 g ai/ha im Vor- und Nachauflaufverfahren in Soja oder auf Nichtkulturland.
e) Lactofen, d.h. 5-[2-Chlor-4-(trifluormethyl)-phenoxy]-2-nitro-benzoesäure-1-(ethoxycarbonyl)-ethylester; Anwendung als Einzelwirkstoff z.B. mit 50 - 500 g ai/ha im Vor- und Nachauflauf in Soja und Getreide.
f) Fomesafen, d.h. N-Methylsulfonyl-5-[2-chlor-4-(trifluormethyl)-phenoxy]-2-nitrobenzamid; Anwendung als Einzelwirkstoff z.B. mit 50 - 1000 g ai/ha im Vor- und Nachauflauf in Soja oder Getreide.

Die genannten Nitrophenylether sind alle in "The Pesticide Manual" beschrieben (vgl. "The Pesticide Manual", British Crop Protection Council, 9th Edition 1991).

Die erfindungsgemäßen Mittel können zusätzlich eine oder mehrere Verbindungen aus der Gruppe, welche aus Herbiziden vom Wuchsstoff-Typ, Dicamba und dessen Salzen, Diflufenican, Sulfonylharnstoffen, die von dem der Formel (I) verschieden sind, und deren Salzen und selektiven Gräserherbiziden besteht, enthalten.

Als Herbizide vom Typ der Wuchsstoffe sind vor allem folgende geeignet:
- a) MCPB: d.h. 4-(4-Chlor-2-methyl-phenoxy)-butansäure oder deren Salze (z.B. Natriumsalz);
- b) Mecoprop: d.h. 2-(4-Chlor-2-methylphenoxy)-propionsäure oder deren Salze; als racemisches Gemisch oder als (R)-Isomer (Mecoprop-P);
- c) 2,4-D: d.h. 2-(2,4-Dichlorphenoxy)-essigsäure oder deren Salze oder Ester;
- d) 2,4-DB: d.h. 4-(2,4-Dichlorphenoxy)-butansäure oder deren Salze;
- e) Dichlorprop: d.h. 2-(2,4-Dichlorphenoxy)-propionsäure oder deren Salze oder Ester,
- f) MCPA: d.h. 2-(4-Chlor-2-methyl-phenoxy)-essigsäure oder deren Salze.

Die genannten Verbindungen a) bis f) stellen Standardherbizide in einer Vielzahl Iandwirtschaftlich genutzter Kulturarten zur Bekämpfung von Unkräutern und Cyperaceen im Nachauflauf-Verfahren dar. Mit Aufwandmengen von 100 - 3000 g ai/ha als Einzelwirkstoffe wird jeweils ein spezifischer Teil der Unkrautflora abgedeckt. Zur Anwendung kommen die verschiedenen Verbindungen als Salzund/oder Esterformen (Literatur: vgl. "The Pesticide Manual", Bereits oben erwähnt und dort zitierte Literatur).

Dicamba, d.h. 3,6-Dichlor-2-methoxy-benzoesäure (oder dessen Salze und Ester), ist ebenfalls ein weitverbreiteter herbizider Wirkstoff, dessen Anwendung analog zu den Wuchsstoff-herbiziden einzustufen ist. Zur Anwendung kommt der Wirkstoff vorwiegend im Nachauflauf (z.B. in Getreide, Mais u.a.) und ebenfalls dessen Salzund/oder Ester-Formen (vgl. "The Pesticide Manual", bereits oben genannt).

Diflufenican, d.h. N-(2,4-Difluorphenyl)-2-[3-(trifluormethyl)-phenoxy]-pyridin-3-carboxamid, wird im Vor- und Nachauflauf mit 50 - 500 g ai/ha zur Bekämpfung von Unkräutern in Getreide und anderen Kulturarten eingesetzt. Die kommerzielle Verwertung erfolgt größtenteils in Fertigformulierungen mit anderen herbiziden Wirkstoffen (vgl. "The Pesticide Manual", bereits oben erwähnt).

Als Sulfonylharnstoffe sind vor allem folgende geeignet:
a) Sulfonylharnstoffe, die vor allem in Getreide, z.T. in Kartoffeln und im Grünland zur Unkraut- und Ungrasbekämpfung im Nachauflaufverfahren (z.B. mit 5 - 80 g ai/ha) eingesetzt werden, z.B.
   aa) Triasulfuron, d.h. 1-[2-(2-Chlorethoxy)-phenylsulfonyl]-3-(4-methoxy-6-methyl-1,3,5-triazin-2-yl)-harnstoff;
   ab) Chlorsulfuron, d.h. 1-(2-Chlorphenylsulfonyl)-3-(4-methoxy-6-methyl-1,3,5-triazin-2-yl)-harnstoff;
   ac) Tribenuron oder Tribenuron-methyl, d.h. 1-[2-(Carboxy- bzw. Methoxycarbonyl)-phenylsulfonyl]-3-methyl-3-(4-methoxy-6-methyl-1,3,5-triazin-2-yl)-harnstoff;
   ad) Thifensulfuron oder Thifensulfuron-methyl, d.h. 1-[2-(Carboxy- bzw. Methoxycarbonyl)-thiophen-3-yl-suflonyl]-3-(4-methoxy-6-methyl-1,3,5-triazin-2-yl)-harnstoff und
b) Sulfonylharnstoffe, die vor allem in Mais und Dauerkulturen zur Ungras- und Unkrautbekämpfung im Nachauflaufverfahren (5 - 80 g ai/ha) eingesetzt werden, z.B.
   ba) Nicosulfuron, d.h. 1-[3-(Dimethylaminocarbonyl)-pyridin-2-yl-sulfonyl]-3-(4,6-dimethoxypyrimidin-2-yl)-harnstoff;
   bb) Primisulfuron oder Primisulfuronmethyl, d.h. 1-[2-(Carboxy- bzw. Methylcarbonyl)-phenylsulfonyl]-3-[4,6-bis(difluormethoxy)-pyrimidin-2-yl]-harnstoff;
   bc) DPX-E 9636, d.h. 1-[3-(Ethylsulfonyl)-pyridin-2-yl-sulfonyl]-3-(4,6-dimethoxy-pyrimid-2-yl)-harnstoff;
   bd) Pyridylsulfonylharnstoffe, wie sie in der PCT-Patentanmeldung PCT/EP 90/02308 (WO 91/10660) beschrieben sind, vorzugsweise solche der Formel A1 oder deren Salze, 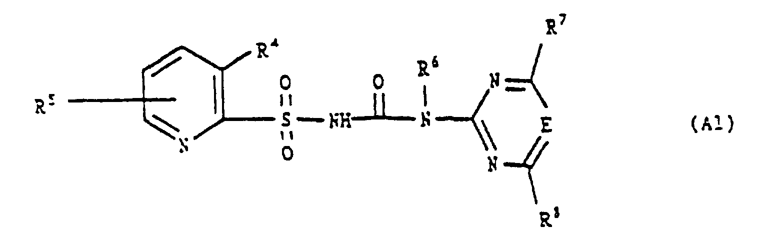
worin
- E: CH oder N, vorzugsweise CH,
- R⁴: Iod oder NR⁹R¹⁰,
- R⁵: H, Halogen, Cyano, C₁-C₃-Alkyl, C₁-C₃-Alkoxy, C₁-C₃-Haloalkyl, C₁-C₃-Haloalkoxy, C₁-C₃ Alkylthio, (C₁-C₃-Alkoxy)-C₁-C₃-alkyl, (C₁-C₃-Alkoxy)-carbonyl, Mono- oder Di-(C₁-C₃-alkyl)-amino, C₁-C₃-Alkyl-sulfinyl oder - sulfonyl, SO₂-NR^{a}R^{b} oder CO-NR^{a}R^{b}, insbesondere H,
- R^{a},R^{b}: unabhängig voneinander H, C₁-C₃-Alkyl, C₁-C₃-Alkenyl, C₁-C₃-Alkinyl oder zusammen -(CH₂)₄-, -(CH₂)₅- oder -(CH₂)₂-O-(CH₂)₂-,
- R⁶: H oder CH₃,
- R⁷: Halogen, C₁-C₂-Alkyl, C₁-C₂-Alkoxy, C₁-C₂-Haloalkyl, vorzugsweise CF₃, C₁-C₂-Haloalkoxy, vorzugsweise OCHF₂ oder OCH₂CF₃,
- R⁸: C₁-C₂-Alkyl, C₁-C₂-Haloalkoxy, vorzugsweise OCHF₂ oder C₁-C₂-Alkoxy, und
- R⁹: C₁-C₄-Alkyl und R¹⁰ C₁-C₄-Alkylsulfonyl oder R⁹ und R¹⁰ gemeinsam eine Kette der Formel -(CH₂)₃SO₂- oder -(CH₂)₄SO₂-
bedeuten.

Die vorstehend unter aa) bis ba) genannten Herbizide sind in "The Pesticide Manual" (bereits oben erwähnt) beschrieben.

Primisulfuron und Primisulfuronmethyl sind aus Brighton Crop Protection Conference - Weeds - 1987, S. 41 - 48 bekannt.

DPX-E 9636 ist aus Brighton Crop Protection Conference - Weeds - 1989, S. 33 ff bekannt.

Als Gräserherbizide sind vor allem die folgenden Herbizide zur selektiven Bekämpfung von Schadpflanzen (Schadgräsern und Unkräutern) in Getreide im Nachauflauf geeignet (Aufwandmengenbereich von 30 bis 1000 g ai/ha):
a) Diclofop oder Diclofop-methyl, d.h. 2-[4-(2,4-Dichlorphenoxy)-phenoxy]-propionsäure bzw. -propionsäuremethylester;
b) Tralkoxydim, d.h. 2-[1-(Ethoxyimino)-propyl]-3-hydroxy-5-mesitylcyclohex-2-en-1-on;
c) Difenzoquat, d.h. 1,2-Dimethyl-3,5-diphenyl-pyrazoliumsalze;
d) Imazamethabenz, d.h. Mischung aus 6-(4-Isopropyl-4-methyl-5-oxo-2-imidazolin-2-yl)-3-methyl-benzoesäure und -4-methyl-benzoesäure oder deren Methylester;
e) Flamprop oder Flampropmethyl, d.h. N-Benzoyl-N-(3-Chlor-4-fluorphenyl)-alanin bzw. -alaninmethylester;
f) CGA-184927, d.h. (2R)-2-[4-(5-Chlor-3-fluorpyridin-2-yloxy)-phenoxy]-propionsäure-propargylester.

Die letzgenannten Verbindungen a) bis e) sind ebenfalls in "The Pesticide Manual" (siehe oben) beschrieben.

CGA-184927 ist aus EP-A-191 736 und Brighton Crop Protection Conference - Weeds - 1989 bekannt.

Überraschenderweise hat sich gezeigt, daß bei gemeinsamer Anwendung von Amidosulfuron mit einem oder mehreren Wirkstoffen aus der Gruppe B der Nitrodiphenylether überadditive (= synergistische) Effekte auftraten. Dabei war die Wirkung in den Kombinationen stärker als die der eingesetzten Einzelprodukte bei alleiniger Anwendung. Diese Effekte erlauben eine Reduzierung der Aufwandmenge, die Bekämpfung eines breiteren Spektrums von Unkräutern und Ungräsern, eine schnellere Wirkung, eine längere Dauerwirkung, eine komplette Kontrolle der Schadpflanzen mit nur einer bzw. wenigen Applikationen sowie eine Ausweitung des möglichen Anwendungszeitraumes der Wirkstoffe in Kombination. Diese Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen bezüglich der beschriebenen Eigenschaften deutlich übertroffen.

Die Wahl des Gewichtsverhältnisses und die Aufwandmengen sind beispielsweise von Mischungspartner, Entwicklungsstadium der Unkräuter oder Ungräser, Unkrautspektrum, Umweltfaktoren und Klimabedingungen abhängig.

Die Gewichtsverhältnisse A:B der kombinierten Herbizide können daher innerhalb weiter Grenzen schwanken und liegen in der Regel bei 1:200 bis 20:1.

### Vorzugsweise werden folgende Gewichtsverhältnisse angewendet:

Bei Kombinationen von den Verbindungen der Formel (I) oder deren Salzen
- mit Nitrodiphenylethern: 1:200 bis 10:1, vorzugsweise 1:50 bis 5:1

Die Aufwandmengen des Herbizids A in den Wirkstoffkombinationen liegen bevorzugt zwischen 5 und 100 g ai/ha, (ai = bezogen auf aktiven Wirkstoff). Die Aufwandmengen von Verbindungen des Typs B sind in den Mischungen in der Regel von 5 bis 100 g ai/ha, vorzugsweise
- bei Nitrodiphenylethern 10 bis 1000 g ai/ha

Die erfindungsgemäßen Wirkstoffkombinationen können sowohl als Mischformulierungen der beiden Komponenten vorliegen, die dann in üblicher Weise mit Wasser verdünnt zur Anwendung gebracht werden, oder als sogenannte Tankmischungen durch gemeinsame Verdünnung der getrennt formulierten Komponenten mit Wasser hergestellt werden.

Die Verbindungen vom Typ A und Typ B oder deren Kombinationen können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), emulgierbare Konzentrate (EC), wäßrige Lösungen (SL), Emulsionen (EW) wie Ölin-Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Fettalkoholpolyglykolethersulfate, Alkansulfonate oder Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 2 bis 95 Gew.-%, Wirkstoffe der Typen A + B. Die Konzentrationen der Wirkstoffe A + B können in den Formulierungen verschieden sein.

In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration etwa 1 bis 85 Gew.-%, vorzugsweise 5 bis 80 Gew.-% betragen. Staubförmige Formulierungen enthalten etwa 1 bis 25 Gew.-%, meistens 5 bis 20 Gew.-% an Wirkstoff, versprühbare Lösungen etwa 0,2 bis 25 Gew.-%, vorzugsweise 2 bis 20 Gew.-% Wirkstoff. Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Farb- und Trägerstoffe, Entschäumer, Verdunstungshemmer und den pH-Wert und die Viskosität beeinflussende Mittel.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche ausgebracht werden.
Bevorzugt ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Folgende Beispiele dienen zur Erläuterung der Erfindung:

### A. Formulierungsbeispiele

a) Ein Stäubemittel wird erhalten, indem man 10 Gew.-Teile einer erfindungsgemäßen Wirkstoffkombination und 90 Gew.-Teile Talkum als Inertstoff mischt und in einer Schlagmühle zerkleinert.
b) Ein in Wasser leicht dispergierbares, benetzbares Pulver wird erhalten, indem man 25 Gew.-Teile Wirkstoffe A + B, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leich dispergierbares Dispersionskonzentrat wird erhalten, indem man 20 Gew.-Teile Wirkstoffe A + B mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis 277°C) mischt und in einer Reibkugelmühle auf eine Feinheit von unter 5 Mikron vermahlt.
d) Ein emulgierbares Konzentrat wird erhalten aus 15 Gew.-Teilen Cyclohexanon als Lösemittel und 10 Gew.-Teilen oxethyliertes Nonylphenol als Emulgator.
e) Ein in Wasser dispergierbares Granulat wird erhalten indem man
   75 Gew.-Teile Wirkstoffe A + B,
   10 Gew.-Teile ligninsulfonsaures Calcium,
   5 Gew.-Teile Natriumlaurylsulfat,
   3 Gew.-Teile Polyvinylalkohol und
   7 Gew.-Teile Kaolin
   mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man
   25 Gew.-Teile Wirkstoffe A + B,
   5 Gew.-Teile 2,2'-dinaphthylmethan-6,6'-disulfonsaures Natrium,
   2 Gew.-Teile oleoylmethyltaurinsaures Natrium,
   1 Gew.-Teil Polyvinylalkohol,
   17 Gew.-Teile Calciumcarbonat und
   50 Gew.-Teile Wasser
auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

### B. Biologische Beispiele

Verschiedene wirtschaftlich wichtige Unkräuter und Ungräser waren unter natürlichen Freilandbedingungen aufgewachsen (Feldversuche). Die Applikation der Herbizid-Mischungen erfolgte im 2- bis 5-Blatt-Stadium der Kulturpflanzen und der Schadpflanzen mittels Parzellen-Spritzgeräten. Die Wasseraufwandmenge betrug 300 - 400 Liter Wasser je Hektar.

Im Zeitraum von 4 Wochen nach der Applikation wurde die herbizide Wirksamkeit der behandelten Teilstücke im Vergleich zu unbehandelten Kontrol-Parzellen durch visuelle Bonituren bewertet. Dabei wurde die herbizide Wirkung bezüglich der Beeinflussung des Pflanzenwachstums und chlorotischer und nekrotischer Effekte bis zum totalen Absterben der Unkräuter qualitativ und quantitativ bewertet.

Es zeigte sich, daß durch die Einzelwirkstoffe nur in hohen Dosierungen einzelne Unkräuter gut bekämpft werden. Die Kombinationspartner, in niedrigen Dosierungen appliziert, zeigen nur geringe, bei weitem nicht die in der Praxis geforderte Wirksamkeit. Durch die gemeinsame Anwendung der Wirkstoffe lassen sich gute Effekte gegen alle geprüften Unkrautarten erzielen. Dabei wurde die additive Wirkung aus den Einzelkomponenten deutlich übertroffen (Synergie), d.h., daß das geforderte Bekämpfungs-Niveau durch deutlich niedrigere Aufwandmengen erzielt wird. Durch diese Effekte wird das Wirkungsspektrum breiter.

Die Kulturverträglichkeit, in Form von Schädigungen bewertet, wird nicht negativ beeinflußt, d.h. daß die Kombinationen als voll selektiv bewertet werden können.

## Patentansprüche

1. Herbizide Mittel, **dadurch gekennzeichnet, daß** sie
A) eine Verbindung der Formel I oder deren Salze 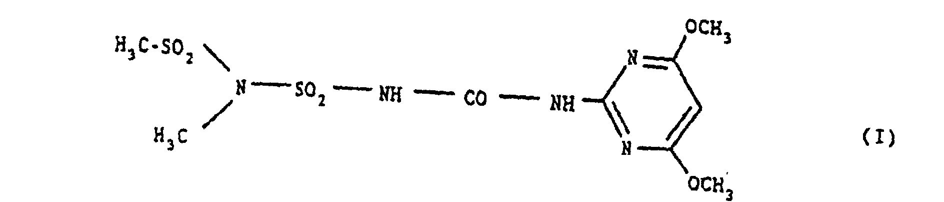 in Kombination mit
B) einer oder mehreren Verbindungen aus der Gruppe, welche aus Nitrodiphenylethern besteht, in einer synergistisch wirksamen Menge enthalten.

2. Mittel nach Anspruch 1, **dadurch gekennzeichnet, daß** die Herbizide vom Typ B aus Nitrodiphenylethern aus der Gruppe, welche aus Acifluorfen, Oxyfluorfen, Lactofen und Fomesafen besteht, ausgewählt sind.

3. Mittel nach Anspruch 1 oder 2, **gekennzeichnet durch** einen zusätzlichen Gehalt an Herbiziden vom Wuchsstoff-Typ, Dicamba und dessen Salzen, Diflufenican selektiven Gräserherbiziden und/oder Sulfonylharnstoffen, die von dem der Formel (I) verschieden sind, und/oder deren Salzen.

4. Mittel nach Anspruch 3, **dadurch gekennzeichnet, daß** die Wuchsstoffherbizide aus der Gruppe, welche aus MCPB, Mecoprop, 2,4-D, 2,4-DB, Dichlorprop und MCPA besteht, sowie Dicamba, Diflufenican, die Gräserherbizide aus der Gruppe, welche aus Diclofop, Diclofop-methyl, Tralkoxydim, Difenzoquat, Imazamethabenz, Flamprop, Flampropmethyl und CGA-184 927 besteht und die Sulfonylharnstoffe aus der Gruppe, welche aus Triasulfuron, Chlorsulfuron, Tribenuron, Tribenuronmethyl, Thifensulfuron, Thifensulfuronmethyl, Nicosulfuron, Primisulfuron, Primisulfuronmethyl, DPX-E 9639 und Pyridylsulfonylharnstoffen besteht, ausgewählt sind.

5. Mittel nach einem oder mehreren der Ansprüche 1 bis 4, **dadurch gekennzeichnet, daß** sie die Verbindung (I) oder deren Salze und die Verbindungen aus der Gruppe B in einem Gewichtsverhältnis von 1:200 bis 20:1 enthalten.

6. Mittel nach einem der Ansprüche 1 bis 5, **dadurch gekennzeichnet, daß** sie neben den Wirkstoffen des Typs A bzw. B übliche Formulierungshilfsmittel enthalten.

7. Verfahren zur Herstellung eines Mittels nach einem oder mehreren der Ansprüche 1 bis 6, **dadurch gekennzeichnet, daß** man die Verbindung der Formel (I) oder deren Salze mit einer oder mehreren Verbindungen des Typs B analog einer üblichen Pflanzenschutzmittelformulierung aus der Gruppe, enthaltend Spritzpulver, emulgierbare Konzentrate, wäßrige Lösungen, Emulsionen, versprühbare Lösungen (tank-mix), Dispersionen auf Öl- oder Wasserbasis, Suspoemulsionen, Stäubemittel, Beizmittel, Granulate zur Boden- oder Streuapplikation, wasserdispergierbare Granulate, ULV-Formulierungen, Mikrokapseln und Wachse, formuliert.

8. Verfahren zur Bekämpfung von unerwünschten Pflanzen, **dadurch gekennzeichnet, daß** man auf diese oder die Anbaufläche eine herbizid wirksame Menge einer der in einem oder mehreren der Ansprüche 1 bis 6 definierten Kombinationen von Wirkstoffen A + B appliziert.

9. Verfahren nach Anspruch 8,**dadurch gekennzeichnet, daß** die Aufwandmengen für die Verbindungen der Formel (I) oder deren Salze von 5 bis 100 g/ha und die Aufwandmengen für die Verbindungen vom Typ B von 5 bis 1000 g/ha betragen.

10. Verfahren nach Anspruch 8 oder 9,**dadurch gekennzeichnet, daß** die Wirkstoffe der Typen A und B im Gewichtsverhältnis 1:200 bis 20:1 appliziert werden.

11. Verwendung von nach einem oder mehreren der Ansprüche 1 bis 6 definierten Mitteln zur Bekämpfung von unerwünschtem Pflanzenwuchs.

12. Verwendung nach Anspruch 11, **gekennzeichnet durch** die selektive Bekämpfung von Schadpflanzen in Nutzpflanzenkulturen.

## Claims

1. A herbicidal composition which comprises
A) a compound of the formula I or salts thereof 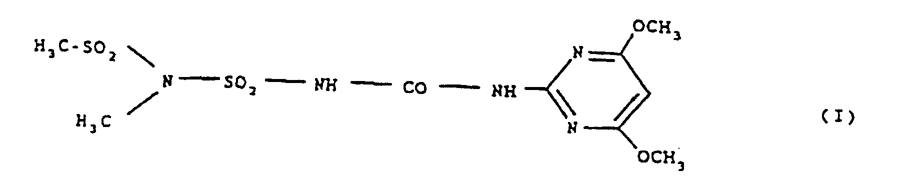 in combination with
B) one or more compounds selected from the group comprising nitrodiphenyl ethers in a synergistically effective amount.

2. A composition as claimed in claim 1, wherein the B type herbicides are selected from amongst nitrodiphenyl ethers of the group comprising acifluorfen, oxyfluorfen, lactofen and fomesafen.

3. A composition as claimed in claim 1 or 2, which additionally comprises growth-regulator-type herbicides, dicamba and its salts, diflufenican, selective grass herbicides and/or sulfonylureas which are different from that of formula (I), and/or their salts.

4. A composition as claimed in claim 3, wherein the growth-regulator herbicides are selected from amongst the group comprising MCPB, mecoprop, 2,4-D, 2,4-DB, dichlorprop and MCPA, as well as dicamba, diflufenican, the grass herbicides selected from the group comprising diclofop, diclofop-methyl, tralkoxydim, difenzoquat, imazamethabenz, flamprop, flamprop-methyl and CGA-184927 and the sulfonyl-ureas selected from the group comprising triasulfuron, chlorsulfuron, tribenuron, tribunuronmethyl, thifensulfuron, thifensulfuronmethyl, nicosulfuron, primisulfuron, primisulfuronmethyl, DPX-E 9639 and pyridylsulfonylureas.

5. A composition as claimed in one or more of claims 1 to 4, which comprises the compound (I) or salts thereof and the compounds selected from group B in a ratio by weight of 1:200 to 20:1.

6. A composition as claimed in one of claims 1 to 5, which comprises, besides the active substances of type A or B, customary formulation auxiliaries.

7. A process for the preparation of a composition as claimed in one or more of claims 1 to 6, which comprises formulating the compound of the formula (I) or salts thereof with one or more B type compounds analogously to a customary crop protection agent formulation selected from the group comprising wettable powders, emulsifiable concentrates, aqueous solutions, emulsions, sprayable solutions (tank mix), dispersions on an oil or water basis, suspoemulsions, dusting powders, seed-dressing agents, granules for soil application or for broadcasting, water-dispersible granules, ULV formulations, microcapsules and waxes.

8. A method of controlling undesired plants, which comprises applying a herbicidally effective amount of a combination of active substances A + B as defined in one or more of claims 1 to 6, to these plants or to the area under cultivation.

9. The method as claimed in claim 8, wherein the application rates of the compounds of the formula (I) or salts thereof are from 5 to 100 g/ha and the application rates of the B type compounds are from 5 to 1000 g/ha.

10. The method as claimed in claim 8 or 9, wherein the active substances of types A and B are applied in a ratio by weight of 1:200 to 20:1.

11. The use of a composition as defined in one or more of claims 1 to 6 for controlling undesired plant growth.

12. The use as claimed in claim 11, wherein harmful plants in crops of useful plants are controlled selectively.

## Revendications

1. Agents herbicides **caractérisés en ce qu'**ils contiennent
A) un composé de formule I ou ses sels 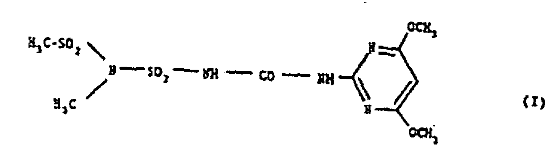 en combinaison avec
B) un ou plusieurs composés du groupe constitué des nitrodiphényléthers en une quantité efficace de façon synergique.

2. Agents selon la revendication 1, **caractérisés en ce que** les herbicides du type B sont choisis parmi les nitrodiphényléthers dans le groupe constitué de acifluorfen, oxyfluorfen, lactofen et fomasafen.

3. Agents selon la revendication 1 ou 2 **caractérisés par** une teneur supplémentaire en herbicides du type substance de croissance, dicamba et ses sels, diflufenican, herbicides sélectifs des herbes et/ou sulfonylurées, qui sont différents de celui de la formule (I), et/ou de ses sels.

4. Agents selon la revendication 3, **caractérisés en ce que** les herbicides du type substance de croissance sont choisis dans le groupe constitué de MCPB, mecoprop, 2,4-D, 2,4-DB, dichlorprop et MCPA, ainsi que dicamba, diflufenican, les herbicides des herbes sont choisis dans le groupe constitué de diclofop, diclofop-methyl, tralkoxydim, difenzoquat, imazamethabenz, flamprop, flampropmethyl et CGA-184 927 et les sulfonylurées sont choisies dans le groupe constitué de triasulfuron, chlorsulfuron, tribenuron, tribenuronmethyl, thifensulfuron, thifensulfuronmethyl, nicosulfuron, primisulfuron, primisulfuronmethyl, DPX-E 9639 et pyridylsulfonylurée.

5. Agents selon une ou plusieurs des revendications 1 à 4, **caractérisés en ce qu'**ils contiennent le composé (I) ou ses sels et les composés du groupe B dans un rapport en poids de 1:200 à 20:1.

6. Agents selon une ou plusieurs des revendications 1 à 5, **caractérisés en ce qu'**ils contiennent, en plus des substances actives du type A ou B, des adjuvants de formulation courants.

7. Procédé pour la préparation d'un agent selon une ou plusieurs des revendications 1 à 6, **caractérisé en ce que** l'on formule le composé de formule (I) ou ses sels avec un ou plusieurs composés du type B de façon analogue à une formulation phytosanitaire courante choisie dans le groupe constitué par des poudres pour poudrage, concentrés émulsionnables, solutions aqueuses, émulsions, solutions pulvérisables (mélange extemporané), suspensions à base d'huile ou à base d'eau, suspoémulsions, agents pour poudrage, agents de désinfection, granulés pour l'application au sol respectivement pour l'application dispersive, granulés solubles dans l'eau, formulations ULV, microcapsules et cires.

8. Procédé de lutte contre les plantes indésirables, **caractérisé en ce que** l'on applique sur celles-ci ou la surface cultivable une quantité efficace herbicide d'une des combinaisons de substances actives A + B définies dans une ou plusieurs des revendications 1 à 6.

9. Procédé selon la revendication 8, **caractérisé en ce que** les concentrations d'emploi pour les composés de formule (I) ou leurs sels se trouvent entre 5 et 100 g/ha et les concentrations d'emploi pour les composés du type B se trouvent entre 5 et 1000 g/ha.

10. Procédé selon la revendication 8 ou 9, **caractérisé en ce que** les substances actives des types A et B sont appliquées dans le rapport en poids de 1:200 à 20:1.

11. Utilisation des agents définis selon une ou plusieurs des revendications 1 à 6 pour la lutte contre la croissance indésirable des plantes.

12. Utilisation selon la revendication 11, **caractérisée par** la lutte sélective des plantes nuisibles dans les cultures de plantes utiles.
